# EUROPÄISCHE PATENTSCHRIFT

(11) **EP 2 794 068 B1**
(45) Veröffentlichungstag und Bekanntmachung des Hinweises auf die Patenterteilung: **20.12.2017**
(21) Anmeldenummer: 12830897.0
(22) Anmeldetag: 10.12.2012
(51) Int. Cl.: B01D 53/26, E03B 3/28, F25B 27/00

(54) **VERFAHREN UND EINE VORRICHTUNG ZUR KÄLTEERZEUGUNG INSBESONDERE ZUR WASSERRÜCKGEWINNUNG AUS DER LUFT**
METHOD AND DEVICE FOR REFRIGERATION ESPECIALLY FOR RECOVERING WATER FROM AIR
PROCÉDÉ ET DISPOSITIF DE PRODUCTION DE FROID, EN PARTICULIER POUR LA RÉCUPÉRATION D'EAU À PARTIR DE L'AIR

(30) Priorität: 08.12.2011 DE 102011120419
(43) Veröffentlichungstag der Anmeldung: 29.10.2014
(73) Patentinhaber: G&M Systemtechnik GmbH, 67661 Kaiserslautern (DE)
(72) Erfinder: GÖTZ, Norbert, 67661 Kaiserslautern (DE); SIHOMBING, Moses, 67661 Kaiserslautern (DE); LABORENZ, Dieter, 67661 Kaiserslautern (DE); METZLER, Jutta, 67661 Kaiserslautern (DE); METZLER, Heiner, 67661 Kaiserslautern (DE)
(74) Vertreter: Kodron, Felix
(86) Internationale Anmeldenummer: PCT/DE2012/200083
(87) Internationale Veröffentlichungsnummer: WO 2013/083127

(56) Entgegenhaltungen:
- EP-A1- 1 936 300
- WO-A1-81/02923
- WO-A1-2011/117841
- WO-A2-2011/048594
- DE-A1-102008 064 185
- GB-A- 2 020 413
- GB-A- 2 482 733
- JP-A- 2006 200 821
- US-A1- 2007 028 769
- US-A1- 2010 275 779
- US-A1- 2011 219 801
- PRIDASAWAS W ET AL: "An exergy analysis of a solar-driven ejector refrigeration system", SOLAR ENERGY, PERGAMON PRESS. OXFORD, GB, Bd. 76, Nr. 4, 1. April 2004 (2004-04-01), Seiten 369-379, XP004483449, ISSN: 0038-092X, DOI: 10.1016/J.SOLENER.2003.11.004

## Beschreibung

Die Erfindung betrifft ein Verfahren und eine Vorrichtung zur Kälteerzeugung mittels eines Kompressionskälteverfahrens insbesondere zur Wasserrückgewinnung aus der Luft gemäß dem Oberbegriff des Anspruchs 1.

Die Ressource Wasser gewinnt zunehmend an Bedeutung, insbesondere in den Regionen der Erde, die nicht über ausreichende natürliche Quellen von Süßwasser wie das Grundwasser oder andere Süßwasserquellen verfügen. Hiervon betroffen sind beispielsweise die Trockengebiete der Erde oder auch Krisengebiete, in denen die eventuell vorhandenen natürlichen Wasserressourcen verschmutzt oder verseucht und somit nicht mehr als Trinkwasser zu verwenden sind. So besteht trotz häufig unmittelbarer Nähe zu natürlichen Gewässern, insbesondere Salzwasserreservoirs, ein starker Bedarf an Trinkwasser und Brauchwasser, beispielsweise für die Land- und Gartenwirtschaft.

In derart problematischen Regionen ist es daher bekannt, dass Problem der Wasserknappheit durch den Transport des Wassers aus entlegeneren Regionen zu lösen, sei es durch Tanktransporte oder auch durch stationäre Rohrleitungen, wobei dies einen großen Investitionsaufwand bedeutet.

Desweiteren sind andere Methoden zur Wassergewinnung bekannt. Ein häufiges Verfahren ist die Wasserentsalzungsanlage, die aus Meerwasser Brauchwasser bzw. Trinkwasser gewinnen kann, wobei hier ein hoher Energieaufwand besteht.

Ein weiterer Weg ist es, der Luft Feuchtigkeit zu entziehen und so Nutzwasser und Trinkwasser zu gewinnen. Eine hierfür bislang bekannte Vorrichtung ist eine sogenannte Wasserfolie, die eine Rückgewinnung durch das Niederschlagen von Kondenswasser an der Folie erreicht. Beispielhafte Veröffentlichungen hierfür sind die DE 20 2007 014 707.4 oder auch die DE 10 2008 059 842 A1. Allerdings sind die Möglichkeiten was die erreichbare Wassermenge aus diesem Verfahren anbetrifft begrenzt. Zudem handelt es sich hierbei um ein anfälliges System, aufgrund der Verwendung der Wasserfolie.

Eine andere technische Lehre der DE 20 2008 001 631 U1 schlägt vor, durch Ausnutzung des Kamineffekts warme und feuchte Luft in einem Steigrohr anzusaugen und dann in einer Führungs- und Kondensationsleitung zu einer Auslassöffnung zu führen. Durch die Abkühlung der Luft auf dem Weg vom Steigrohr zum Luftauslass kommt es zu einer Abkühlung der Luft auf einen Bereich unterhalb des Taupunktes und somit zur Kondensation der Luftfeuchtigkeit und der Wasserabscheidung. Auch dieses Verfahren ist stark limitiert in seiner technischen Anwendung und erfordert zudem eine Verlegung von Rohrleitungen auch innerhalb des Erdreichs und ist somit nur stationär anwendbar.

Aus der Veröffentlichung 196 32 272 ist eine Vorrichtung zur Wasserrückgewinnung bekannt, die eine photovoltaische Energiequelle umfasst, die ein Kühlaggregat mit Energie versorgt, wobei über dieses Kühlaggregat eine Ausfällung von Wasser aus der Umgebungsluft erfolgt.

Nachteilig hierbei ist, dass es sich bei der vorliegenden Anlage um eine lediglich stationär einbaubare Anlage handelt, wobei Elemente der Anlage unter der Erde eingebaut werden müssen. Zudem wird das Kältemittel im Prozess mit Hilfe eines Thermoelementes thermoelektrisch gekühlt. Hierbei ist nachteilig, dass das hier vorgeschlagene Pelltier-Element eine in der Effizienz geringe Wirkung aufweist.

Aus der Veröffentlichung DE 101 24 649 A1 ist eine Wasserrückgewinnung aus der Atmosphäre offenbart, bei der eine stationäre gebäudeähnliche Anlage vorgestellt wird. Grundidee hierbei ist es, dass im Nachtbetrieb eine Kühlung eines Kühlmittels mittels Kältekollektoren in einem Kältespeicher erfolgt und in einem späteren Tagbetrieb eine weitere in einem Wärmespeicher gespeicherte Flüssigkeit mittels Solarkollektoren erwärmt wird. Das bei Nacht abgekühlte Kühlmittel kann in von Luft durchströmten Kühlregistern dazu genutzt werden, Feuchtigkeit aus der Luft zu kondensieren.

Es ist hierbei nachteilig, dass es sich um eine aufwendige Großanlage handelt, die keinen mobilen Aufbau zulässt. Zudem ist ein komplexer Aufbau vorgesehen mit voneinander getrennt zu behandelnden Kältespeichern und Wärmespeichern für unterschiedliche Anwendungszeiträume.

Die deutsche Veröffentlichung 10 2007 011 462 A1 offenbart eine Anordnung zur Wassergewinnung aus Umgebungsluft, die grundsätzlich die Idee verwirklicht, einen Kompressionskühlkreislauf zu betreiben, um dann über die Kühlleistung eines Verdunsters die Feuchtigkeit aus der Umgebungsluft über Kondensation zu gewinnen. Die Lösung nach dieser Veröffentlichung sieht hierbei vor, dass die hierfür erforderliche Energie über eine Windkraftanlage gewonnen wird, die entweder eine direkte Kraftübertragung auf einen Kolbenkompressor sowie auf einen Elektrizität erzeugenden Generator vorsieht, oder ausschließlich Strom erzeugt über einen Generator, der dann die elektrischen Verbraucher wie den Kompressor und Ventilatoren antreibt.

Hierbei offenbart diese Veröffentlichung einen Kältekreislauf traditioneller Form, wie dieser beispielsweise auch in Kühlschränken zum Einsatz kommt. Die verwendete Kolbenkompressionsmaschine soll hierbei das Kühlmedium auf einen hohen Druck sowie auf eine Temperatur von 200 Grad Celsius verdichten, wobei die für den späteren Kühlprozess und die Kondensation erforderliche Energie durch die Verflüssigung des gasförmigen Kältemediums und Abfuhr von Wärme gewonnen wird.

Es ist hierbei grundsätzlich problematisch, bei dieser offenbarten Lösung, das für den Betrieb des Kältekreislaufs unter den gegebenen Bedingungen ein hoher Energieaufwand erforderlich ist. Es ist davon auszugehen, dass zur Erzeugung der erforderlichen Verdichtung sowie die Temperaturerhöhung auf einen Wert von 200 Grad Celsius der in der Veröffentlichung angegebene Kolbenkompressor kaum ausreichend sein dürfte. Selbst die Verwendung eines leistungsstarken Schraubenverdichters wäre nicht in der Lage, das Kühlmedium auf eine Temperatur von 200 Grad Celsius bei hohem Druck anzuheben.

Zudem würde eine derartige Verdichtereinheit das Problem mit sich bringen, dass ein hoher Energiebedarf erforderlich ist, der durch die vorgegebene Anordnung mit einer kleinen Windkraftanlage nicht zu bewältigen ist. Es wäre hierbei eine derartige Anordnung nur dann mit ausreichend Energie zu versorgen, wenn ein groß dimensioniertes Windkraftelement die Wassererzeugungsanlage in Form des Kühlkreislaufs betreiben würde. Dies bedeutet, daß auch bei dieser Lösung die Mobilität stark eingeschränkt zu bewerten ist.

In der Veröffentlichung US 2011/ 0 219 801 A1 wird ein solarbetriebener Kompressor und eine Pumpe offenbart, die einen muldenförmigen Parabolspiegel aufweist zum Erwärmen eines Kältemittels, das in einer Leitung das System durchläuft. Die Kompressor/Pumpen-Kombination umfasst eine Linse, die den Reflektor abdeckt und vor Wettereinflüssen schützt und eine Erhöhung der Intensität der Sonnenenergie im Reflektor bewirkt. Der Reflektor wandelt so die Sonnenenergie in Wärme um, die das Kühlmittel überhitzt, wenn es durch den Reflektor gelangt, wodurch die mechanischer Arbeit des Kompressors verringert oder ersetzt werden kann, die das System leisten muß, um die erforderliche Überhitzungsstufe zu erreichen.

Aus der WO 81/ 02 923 A1 ist, bekannt, das Arbeitsfluid eines Kompressionskälteverfahrens vor der Kompression und Kondensation zu erwärmen. Eine solche Erwärmung verringert die Gesamtarbeit, die durchgeführt werden muss, um den Druck vor dem Einbringen in die Hochdruckseite des Kühlsystems zu erhöhen. Als Heizelement offenbart die Erfindung Solarkollektoren, Industrieabfall-Wärmetauschern und Abgaswärmetauscher. Diese Heizelemente können auch die mechanische oder elektrische Leistung liefern, die erforderlich ist, um die mechanische Kompression zu erreichen. Die Wärmezufuhr erfolgt hierbei vor der mechanischen Kompression.

Aus der WO 2011/ 117 841 A1 ist eine Vorrichtung zur Gewinnung von Wasser durch Kondensation aus der Luft bekannt, umfassend ein Gebläse zum Erzeugen eines Luftstroms, einen Wärmeübertragungsfluid-Verdampfer zum Kondensieren des Wassers aus dem erzeugten Luftstrom und einen Kompressor zum Komprimieren des verdampften Wärmeübertragungsfluids, wobei der Kompressor nach dem Verdampfer angeordnet ist. Die Erfindung betrifft auch ein System zur Herstellung von Trinkwasser aus der Luft, umfassend die vorgenannte Wassergewinnungsvorrichtung.

Schließlich offenbart die WO 2011/048594 A2 ein Temperatur-Steuersystem mit einem geschlossenen Kühlmittelkreislauf mit einem Verdampfer zum Absorbieren von Wärme über das Kühlmittel, wodurch es verdampft, eine Verdichtereinheit zur Erhöhung des Drucks und der Temperatur des Kältemittels im Kreislauf, und eine Kondensereinheit zum Abgeben von Wärme vom Kühlmittel, um dieses zu verflüssigen. Die Kompressoreinheit weist einen mechanischen Verdichter zum Erhöhen des Drucks des Kältemittels und einem Wärmekollektor zur Verwendung einer externen Wärmequelle auf, um die Temperatur des Kühlmittels zu erhöhen.

Vor diesem Hintergrund ist es die Aufgabe der vorliegenden Erfindung, eine Vorrichtung sowie ein Verfahren zur Kälteerzeugung insbesondere zur Wassergewinnung aus der Umgebungsluft mittels eines Kompressionskälteverfahrens zu schaffen, das zumindest teilweise über Solarenergie betrieben wird. Zudem soll das Verfahren die Dimensionierung des Kompressors so ermöglichen, daß auch ein mobiler Einsatz der Anlage ermöglicht wird.

Erreicht wird dies nach der Erfindung durch eine Vorrichtung zur Kälteerzeugung zur Wassergewinnung aus der Umgebungsluft mittels eines Kompressionskälteverfahrens nach den Merkmalen des Hauptanspruchs.

Die Unteransprüche haben vorteilhafte Ausgestaltungen der Vorrichtung zum Gegenstand.

Erreicht wird dies nach der Erfindung durch ein Verfahren zur Kälteerzeugung zur Wassergewinnung aus der Umgebungsluft mittels eines Kompressionskälteverfahrens nach den Merkmalen des Anspruchs 9.

Kernidee der vorliegenden Lösung ist es hierbei, eine Anlage zu schaffen, die in einer zweiten thermischen Verdichtungsstufe nach der Kompression des Kältemittels durch den Kompressor dieses thermisch nachverdichtet, wobei eine zweckmäßige Ausführung der Erfindung Sonnenenergie sowohl in Form einer Photovoltaikanlage zur Erzeugung von Strom nutzt, als auch zur direkten Beeinflussung des Kühlkreislaufs und des hierin verwendeten Kältemittels in Form eines Sonnenkollektors.

Das heißt, die beispielsweise in den äquatorialen Bereichen der Erde im Überfluss vorhandene Sonnenenergie wird in dieser Anlage, die in einer möglichen Bauform ihrer Größe eine kompakte und leicht zu transportierende Bauweise ermöglicht, in doppelter Hinsicht genutzt, einmal als Spannungsquelle für die elektrischen Verbraucher, wie beispielsweise Lüfter, Kompressor und auch elektronische Steuerungselemente, zum anderen aber als Heizleistung im Bezug auf das Kältemittel, um so eine zusätzliche thermische Verdichtung nach der ersten Vorkompressionsstufe zu erreichen.

Auf diese Weise wird erreicht, dass die Kompressionsstufe deutlich leistungsschwächer ausgelegt werden kann, als dies beispielsweise im Stand der Technik bislang vorgesehen ist. Dies ist ein wesentliches Verbesserungselement, da so die gesamte Energie des Systems in einer vorteilhaften Bauform aufgrund der nur geringen Leistungsbeanspruchung durch den Kompressor durch die Sonnenenergie einer Photovoltaikanlage bewerkstelligt werden kann. Das auf diese Weise vorkomprimierte Kältemittel erfährt somit durch einen Sonnenkollektor eine deutliche Temperaturanhebung und somit eine thermische Verdichtung, die die Leistungsfähigkeit im System nach Durchlaufen der Verflüssigereinheit elementar anhebt.

Vorteile der Vorrichtung und des Verfahrens sind:
- unabhängig von der Stromquelle
- Umweltfreundliche Kältemittel (R600a)
- Mögliche mobile, transportable Modulbauweise
- Versorgung (von erneuerbaren Energien)
- Hohe Leistung von Kälte- bzw. Wärme Energie (bis 30% mehr)
- Überall einsetzbar
- Erweiterbares Nutzungsgebiet :
   - Prozesskühlung
   - Kühlcontainer
   - Klimatisierung
   - Heizungsanlage

Es ist hierbei der Einsatz der Erfindung noch dadurch ausbaubar, daß zusätzlich zur Energiequelle der Sonnenenergie weitere Formen der speicherbaren Energie wie in Akkumulatoren gespeicherte elektrische Energie oder auch fossile Energieträger wie Erdgas zum Einsatz kommen. So ist die thermische Nachverdichtung beispielsweise als Ergänzung zu einem Sonnenkollektor auch durch die Verbrennung eines fossilen Energieträgers zu leisten. Somit kann der Betrieb der Vorrichtung bzw. die Durchführung des Verfahrens auch unabhängig oder nur noch begrenzt abhängig vom zur Verfügung stehen der Sonnenenergie gewährleistet werden.

Das erfinderische Verfahren sieht hierbei in einer beispielhaften Ausführung vor, ein Kältemittelgas in einem ersten Verfahrensschritt zu verdichten und in einer entsprechenden Druckspeichereinheit auf einen erhöhten Druck zu überführen. Das so vorkomprimierte Kältemittelgas wird dann einem Sonnenkollektor zugeführt bzw. in diesem thermisch verdichtet.

In diesem Solarkollektor wird nun Sonnenenergie als Wärmeenergie ins Kältemittel eingebracht und somit ein thermischer Verdichtungsprozess erreicht, der später im Verfahren im Verdampfer eine höhere Kühlleistung zur Verfügung stellt. Das Verfahren wird hierbei durch entsprechende Steuerung und Regelungsventile in einer vordefinierten Taktung durchgeführt. An dieser Stelle ist alternativ zum Sonnenkollektor auch ein andere Form der Zuführung thermischer Energie möglich.

Das derart auf ca. 140°C aufgeheizte und unter etwa 6 bar Druck stehende Kältemittelgas wird nun in einem Kondenser wiederum verflüssigt, wodurch es zu einem Energieaustausch vom Kältemittelgas zum gekühlten flüssigen Kältemittel kommt. Der sich erwärmende Kondenser wird hierbei von einem Gebläse gekühlt, um seine optimale Leistung erreichen zu können. Die so entstehende Energie kann nun als Leistung im Verdampfer genutzt werden. Das verflüssigte Kältemittel kann nun in einer Zwischenstufe nochmals gesammelt und weiter gekühlt werden, um eine noch bessere Leistung erzielen zu können.

Im nächsten Schritt wird nun dieses verflüssigte Kältemittel dem Verdampfer zugeführt, wobei der Prozess der Verdampfung zu einer Wärmeaufnahme durch das Kältemittel beiträgt und somit in der Umgebung des verdampfenden Kältemittels eine Abkühlung erfolgt. Die eigentliche Wassergewinnung erfolgt nun durch Umgebungsluft, die durch den Verdampfer mit Hilfe eines Ventilators geleitet wird und am kalten Verdampfer kondensiert. Das heißt, die Feuchtigkeit aus der Umgebungsluft schlägt sich am Verdampfer nieder und kann nun aufgefangen und einem Wasserspeicher zugeführt werden.

Der Kälteprozess erfolgt somit in einem geschlossenen Kreislauf durch den Gleichgewichtszustand von Druck und Temperatur, wobei die zugeführte Energie aus den Sonnenkollektoren bzw. Solarzellen gewonnen wird. Diese Energie wird insbesondere zum Betrieb des Kompressors wie auch der Ventilatoren benötigt.

Durch Einsatz von UV-Licht im späteren Wasserauffangspeicher sowie geeignete Osmose- und Sterilfilter ist die so vorliegende Anlage geeignet, Trinkwasser für Menschen und Tiere herzustellen. Entscheidend ist hierbei, dass die Anlage ohne zusätzliche Energiezufuhr durch erneuerbare Energien wie im vorliegenden Fall Photovoltaik und Sonnenkollektoren verwendet werden kann. Sie ist somit als Modul stationär einsetzbar, ohne dass hierfür bauliche Maßnahmen vor Ort zusätzlich erforderlich sind. Auch eine Variabilität und der Wasserproduktion durch die Verbindung mehrerer Module ist leicht möglich. Dies ist ein erheblicher Unterschied zu den aufgezeigten Lösungen im Stand der Technik.

Nachfolgend wird eine vorteilhafte Bauform der Anlage mittels dreier Zeichnungen näher erläutert. Es handelt sich hierbei um schematische Darstellungen der Anwendung der Erfindung in Form einer Luft-Wasseranlage, die insbesondere nicht eine tatsächlich bauliche Anordnung der Elemente wiedergibt, sondern lediglich den Ablauf des Verfahrens verdeutlichen soll.

Es zeigen
- Figur 1: eine Bauform mit integriertem Kühlraum und Wärmespeicher,
- Figur 2: eine Bauform mit integriertem Wärmespeicher,
- Figur 3: eine Grundbauform.

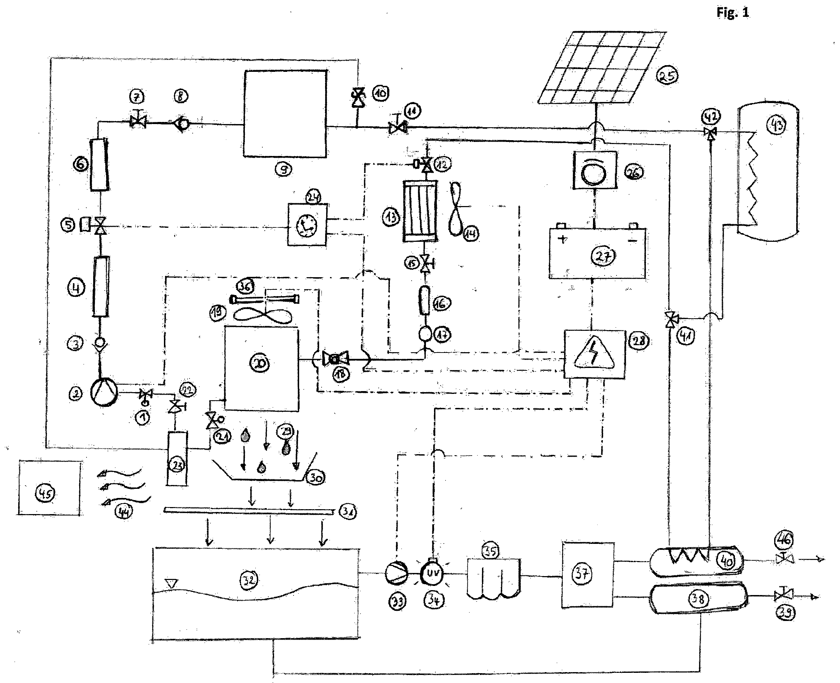

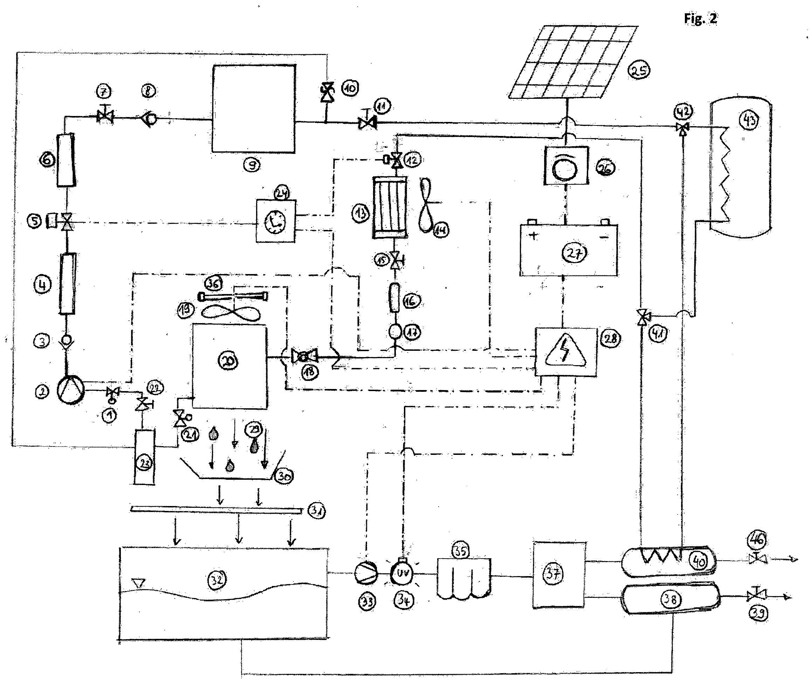

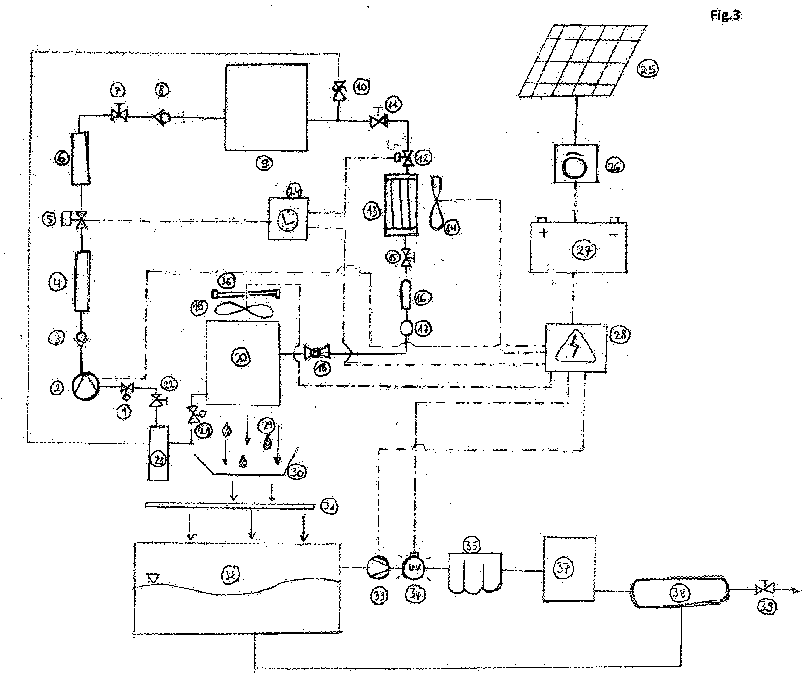

In den Figuren 1 bis 3 sind die elementaren Bauteile des Kompressors 2, des Sonnenkollektors als thermischen Verdichter 9, des Verflüssigers bzw. Kondensers 13 sowie des Verdampfers bzw. Evaporators 20 dargestellt. Es ist hierbei ebenfalls erkennbar, dass für die Taktung des Verfahrens im Kältekreislauf zum einen Vordruckpatronen 4 und 6 vorgesehen sind, wie auch ein Gassammelbehälter 23. Diese Elemente sind für den Ablauf des Verfahrens relevant, um die verschiedenen Aggregatzustände des Kältemittels im Verfahren vorzuhalten und so ein durchgängig auf einem Niveau befindliches Kälteverfahren zu erreichen. Es sind hierfür eine Reihe von Ventilen, beispielsweise 3, 5, 7 und 18 vorgesehen, um eine Ansteuerbarkeit des Verfahrens über eine entsprechende Elektronik erreichen zu können.

Der Verflüssiger 13 wird hierbei über eine Luftkühlung mittels eines Lüfters 14 gekühlt, um den Verflüssigungsvorgang des heißen und unter Druck stehenden Kältemittelgases zu erreichen. Ebenfalls mit einem Gebläse 19 versehen ist der Verdampfer 20, um so eine konstante Zufuhr der Umgebungsluft hoher Luftfeuchtigkeit zum Verdampfer zu bewirken, wodurch ein konstanter Luftstrom an den durch das Kältemittel geführten Verdampferspiralen vorbeigeführt wird und so zu einer Kondensation des Wassers aus der Umgebungsluft beiträgt, das in einem Wasserspeicher 32 aufgefangen wird.

Ebenfalls dargestellt ist das Photovoltaikmodul 25 mit nachgeschaltetem Spannungswandler 26, wobei hier keinerlei Schnittstellen zu den elektrischen Verbrauchern dargestellt sind. So ist beispielsweise die elektronische Steuerung, die ebenfalls bildlich nicht dargestellt ist, als elektrischer Verbraucher vorhanden. Desweiteren ist eine Anordnung von Akkumulatoren 27 an einer zweckmäßigen Ausführungsform vorgesehen, um den Überfluss an Sonnenenergie in den Sonnenstunden des Tages für das Verfahren zwischen zu speichern. Es ist hierbei ein weiterer Betrieb nach Sonnenuntergang für weitere beispielsweise drei Stunden möglich.

Desweiteren sind nachgeschaltete Elemente nach dem Wasserspeicher dargestellt, nämlich entsprechende Pump- und Filtereinrichtungen 31, 33, 35 und 37, die aus dem aus der Umgebungsluft abgeschiedenen Wasser nun auch vollwertiges Trinkwasser machen können. Es ist hierbei direkt vor dem Wasserspeicher 32 ein Wasserfilter 31 vorgesehen, sowie ein UV-Licht 34 und ein Osmosefilter 35 zwischen einem ersten und einem zweiten Wasserauffangbehälter.

### Bezugszeichnungsliste

- 1,21: Startregler
- 2: Kompressor
- 3,8: Rückschlagventil
- 4,6: Vordruckpatrone
- 5,12: Magnetventil
- 7,11,15,22: Serviceventil /Absperrventil
- 9: Thermische Verdichter/Sonnenkollektor
- 10: Sicherheitsventil
- 13: Kondenser/Verflüssiger
- 14, 19: Gebläse
- 16: Trockner
- 17: Schauglas
- 18: Entlastungsventil
- 20: Verdampfer/Evaporator
- 23: Sammlerpatrone
- 24: Zeitschalter
- 25: Photovoltaikmodul
- 26: Spannungsumwandler
- 27: Akku
- 28: Schaltkasten
- 29: Kondensierte Wasser
- 30: Auffangbehälter
- 31: Wasserfilter
- 32: Wasserspeicher
- 33: Wasserpumpe
- 34: UV-Licht
- 35: Osmosefilter
- 36: Luftfilter
- 37: Mineralisation
- 38: Trinkwasserbehälter (kalt)
- 39, 46: Trinkwasserhahn
- 40: Trinkwasserbehälter (warm)
- 41, 42: Verteiler
- 43: Wärmespeicher
- 44: Kälteluft
- 45: Kühlraum

## Patentansprüche

1. Vorrichtung zur Kälteerzeugung mittels eines Kompressionskälteverfahrens zur Wasserrückgewinnung aus der Luft zumindest umfassend die baulichen Komponenten eines Kompressors (2), eines Kondensers (13) sowie eines Evaporators (20), wobei
- zur Erzeugung der erforderlichen gesamten elektrischen Energie zum Betrieb des Kompressors (2) sowie weiterer elektrischer Verbraucher des Systems zumindest ein Photovoltaikmodul (25) angeordnet ist, **dadurch gekennzeichnet, daß**
- für die Erzeugung einer zusätzlichen thermischen dichtungsstufe zumindest ein Sonnenkollektor als thermischer Verdichter (9) und ein anderes Modul zur Zuführung thermischer Energie Teil der Vorrichtung sind
- und der Kompressor (2) zur Vorverdichtung des entspannten Kältemittels zwischen dem Evaporator (20) und dem zumindest einen thermischen Verdichter (9) und der thermische Verdichter (9) zur Nachverdichtung des vorverdichteten Kältemittels zwischen dem Kompressor (2) und dem Kondenser (13) angeordnet ist,
- wobei zumindest eine Vordruckpatrone(4, 6) und getaktet ansteuerbare Ventile (3, 5, 7, 8) zwischen dem Kompressor (2) und dem thermischen Verdichter (9) angeordnet sind.

2. Vorrichtung zur Kälteerzeugung nach Anspruch 1, **dadurch gekennzeichnet, dass**
- ein in Kühlkreisläufen verwendeter standardisierter Kompressor (2) mit einer Leistungsaufnahme unter 250 Watt verwendet wird,
- wobei eine zusätzliche thermische Verdichtung durch eine Heizleistung des Sonnenkollektors als thermischen Verdichter (9) von zumindest 3 Kilowatt erfolgt.

3. Vorrichtung zur Kälteerzeugung nach Anspruch 1 oder 2,
**dadurch gekennzeichnet, dass**
zur Speicherung der durch das Photovoltaikmodul (25) erzeugten Spannung Akkumulatoren (27) vorgesehen sind.

4. Vorrichtung zur Kälteerzeugung nach einem der vorangegangenen Ansprüche,
**dadurch gekennzeichnet, dass**
eine Wasseraufbereitung integriert ist, die eine Sterilfiltration (31) und/oder UV-Behandlung (34) und/oder Osmosefilterung (35) des kondensierten Wassers umfasst.

5. Vorrichtung zur Kälteerzeugung nach einem der vorangegangenen Ansprüche,
**dadurch gekennzeichnet, dass**
- dem Kondenser (13) eine Luftkühlung mittels eines Gebläses (14) zugeordnet ist
- und dem Evaporator (20) die Umgebungsluft mittels eines Gebläses (19) konstant zugeführt wird.

6. Vorrichtung zur Kälteerzeugung nach einem der vorangegangenen Ansprüche,
**dadurch gekennzeichnet, dass**
die über den Evaporator (20) gekühlte und in ihrer Luftfeuchtigkeit abgesenkte Umgebungsluft einer weiteren Kühlnutzung zugeführt wird, beispielsweise einer Kälteaufnahmevorrichtung in Form einer Kühlbox oder eines Kühlschranks (45).

7. Vorrichtung zur Kälteerzeugung nach einem der vorangegangenen Ansprüche,
**dadurch gekennzeichnet, dass**
die Vorrichtung als mobile bauliche Einheit ausgebildet ist.

8. Vorrichtung zur Kälteerzeugung nach einem der vorangegangenen Ansprüche,
**dadurch gekennzeichnet, dass**
die durch die Änderung der thermischen Niveaus des Kältemittels abführbare Wärme und Kälte weiteren technischen Anwendungen zugeführt wird.

9. Verfahren zur Kälteerzeugung zur Wassergewinnung aus der Umgebungsluft mittels eines Kompressionskälteverfahrens, wobei zur Erzeugung der erforderlichen gesamten elektrischen Energie zum Betrieb des Kompressors (2) sowie weiterer elektrischer Verbraucher des Systems zumindest ein Photovoltaikmodul (25) angeordnet ist **dadurch gekennzeichnet, daß**
- die Verdichtung des Kältemittels zumindest zweistufig erfolgt,
- wobei in einem ersten Schritt eine mechanische Kompression durch einen Kompressor (2) erfolgt,
- dann das so vorkomprimierte Kältemittel zumindest einer zwischen dem Kompressor (2) und einem thermischen Verdichter (9) angeordneten Vordruckpatrone(4, 6) über getaktet angesteuerte Ventile (3, 8) zugeführt wird
- und in einem zweiten Schritt die thermische Kompression durch einen Sonnenkollektor als thermischen Verdichter (9) und ein anderes Modul zur Zuführung thermischer Energie erfolgt.

## Claims

1. Device for refrigeration by means of a vapour-compression refrigeration process for recovering water from air, at least comprising the following structural components: a compressor (2), a condenser (13) and an evaporator (20), wherein
- for generating the entire electrical energy required to operate the compressor (2) and other energy-consuming devices of the system, at least one photovoltaic module (25) is arranged, **characterized in that**
- for providing an additional thermal compression stage, at least one solar collector as a thermal compressor (9) and another module for supplying thermal energy are part of the device
- and, for pre-compressing the expanded refrigerant, the compressor (2) is arranged between the evaporator (20) and the at least one thermal compressor (9) and, for post-compressing the pre-compressed refrigerant, the thermal compressor (9) is arranged between the compressor (2) and the condenser (13),
- wherein at least one pre-pressure cartridge (4, 6) and timer-activated valves (3, 5, 7, 8) are arranged between the compressor (2) the thermal compressor (9).

2. Device for refrigeration according to Claim 1, **characterized in that**
- a standardized compressor (2) used in cooling circuits with a power consumption of below 250 W is used,
- wherein additional thermal compression takes place as a result of a heating capacity of the solar collector as a thermal compressor (9) of at least 3 kW.

3. Device for refrigeration according to Claim 1 or 2, **characterized in that**
storage batteries (27) are provided for storing the voltage generated by the photovoltaic module (25).

4. Device for refrigeration according to one of the preceding claims,
**characterized in that**
there is an integrated water treatment, which comprises a sterile filtration (31) and/or UV treatment (34) and/or osmosis filtering (35) of the condensed water.

5. Device for refrigeration according to one of the preceding claims,
**characterized in that**
- the condenser (13) is assigned an air cooling by means of a fan (14)
- and the evaporator (20) is constantly fed the ambient air by means of a fan (19).

6. Device for refrigeration according to one of the preceding claims,
**characterized in that**
the ambient air cooled by the evaporator (20) and lowered in its humidity is fed to a further use for cooling, for example a cold retaining device in the form of a cool box or a refrigerator (45).

7. Device for refrigeration according to one of the preceding claims,
**characterized in that**
the device is designed as a mobile structural unit.

8. Device for refrigeration according to one of the preceding claims,
**characterized in that**
the heat and cold that can be removed by the change in the thermal level of the refrigerant is fed to further technical applications.

9. Method for refrigeration for recovering water from the ambient air by means of a vapour-compression refrigeration process,
wherein, for generating the entire electrical energy required to operate the compressor (2) and other energy-consuming devices of the system, at least one photovoltaic module (25) is arranged, **characterized in that**
- the compression of the refrigerant takes place in at least two stages,
- wherein, in a first step, mechanical compression is performed by a compressor (2),
- then the thus pre-compressed refrigerant is fed by way of timer-activated valves (3, 8) at least to a pre-pressure cartridge (4, 6) arranged between the compressor (2) and a thermal compressor (9),
- and, in a second step, the thermal compression is performed by a solar collector as a thermal compressor (9) and another module for supplying thermal energy.

## Revendications

1. Dispositif destiné à la production de froid au moyen d'un procédé de réfrigération par compression, en vue de la récupération de l'eau se trouvant dans l'air, lequel dispositif comprend tout au moins les composants structurels d'un compresseur (2), d'un condenseur (13), ainsi que d'un évaporateur (20), dans lequel
- tout au moins un module photovoltaïque (25) est mis en place en vue de la génération de la totalité de l'énergie électrique requise pour faire fonctionner le compresseur (2) ainsi que d'autres consommateurs électriques du système ;
**caractérisé en ce que**
- tout au moins un collecteur solaire, lequel est conçu sous la forme d'un condensateur thermique (9), et un autre module, lequel est destiné à l'alimentation en énergie thermique, font partie du dispositif pour la production d'un niveau de compression thermique supplémentaire ; et
- le compresseur (2), lequel est destiné à la compression préalable de l'agent réfrigérant détendu, est disposé entre l'évaporateur (20) et le tout au moins un condensateur thermique (9), et le condensateur thermique (9), lequel est destiné à la post-compression de l'agent réfrigérant préalablement compacté, est disposé entre le compresseur (2) et le condenseur (13) ;
- dans lequel tout au moins une cartouche de pré-compression (4, 6) et des soupapes (3, 5, 7, 8), lesquelles peuvent être commandées de manière cadencée, sont disposées entre le compresseur (2) et le condensateur thermique (9).

2. Dispositif destiné à la production de froid selon la revendication 1,
**caractérisé en ce que**
- un compresseur (2) est utilisé, lequel est standardisé en vue d'être employé dans des circuits de refroidissement et lequel présente une puissance absorbée inférieure à 250 Watts ;
- dans lequel une condensation thermique supplémentaire est réalisée par l'intermédiaire d'une puissance de chauffage du collecteur solaire de tout au moins 3 Kilowatts qui fait office de condensateur thermique (9).

3. Dispositif destiné à la production de froid selon la revendication 1 ou 2,
**caractérisé en ce que**
des accumulateurs (27) sont prévus en vue du stockage de la tension produite par le module photovoltaïque (25).

4. Dispositif destiné à la production de froid selon l'une des revendications qui précèdent,
**caractérisé en ce que**
un système de traitement de l'eau est intégré, lequel comprend une filtration stérile (31) et/ou un traitement des UV (34) et/ou une filtration par osmose (35) de l'eau condensée.

5. Dispositif destiné à la production de froid selon l'une des revendications qui précèdent,
**caractérisé en ce que**
- une réfrigération de l'air est associée au condenseur (13) au moyen d'un ventilateur (14) ; et
- l'air ambiant est acheminé en permanence vers l'évaporateur (20) au moyen d'un ventilateur (19).

6. Dispositif destiné à la production de froid selon l'une des revendications qui précèdent,
**caractérisé en ce que**
l'air ambiant qui est refroidi, et dont l'humidité est réduite par l'intermédiaire de l'évaporateur (20), est acheminé vers un autre consommateur de refroidissement, par exemple un dispositif de conservation du froid qui se présente sous la forme d'une boîte de réfrigération ou d'un réfrigérateur (45).

7. Dispositif destiné à la production de froid selon l'une des revendications qui précèdent,
**caractérisé en ce que**
le dispositif est conçu sous la forme d'une unité structurelle mobile.

8. Dispositif destiné à la production de froid selon l'une des revendications qui précèdent,
**caractérisé en ce que**
la chaleur et le froid qui peuvent être évacués par la variation du niveau thermique de l'agent réfrigérant sont acheminés vers d'autres applications techniques.

9. Procédé destiné à la production de froid en vue de la récupération de l'eau à partir de l'air ambiant au moyen d'un procédé de réfrigération par compression ; dans lequel tout au moins un module photovoltaïque (25) est mis en place en vue de la génération de la totalité de l'énergie électrique requise pour faire fonctionner le compresseur (2) ainsi que d'autres consommateurs électriques du système ;
**caractérisé en ce que**
- la condensation de l'agent réfrigérant est tout au moins réalisée sur deux niveaux ;
- dans lequel une compression mécanique est réalisée par l'intermédiaire d'un compresseur (2) lors d'une première phase ;
- l'agent réfrigérant ainsi préalablement comprimé est ensuite acheminé vers tout au moins une cartouche de pré-compression (4, 6) par l'intermédiaire de soupapes (3, 8) commandées de manière cadencée, laquelle cartouche de pré-compression est disposée entre le compresseur (2) et un thermique condensateur (9) ; et
- la compression thermique est réalisée dans une deuxième phase, par l'intermédiaire d'un collecteur solaire, lequel fait office de condensateur thermique (9), et d'un autre module destiné à l'alimentation en énergie thermique.
